# EUROPÄISCHE PATENTSCHRIFT

(11) **EP 1 795 677 B1**
(45) Veröffentlichungstag und Bekanntmachung des Hinweises auf die Patenterteilung: **22.06.2011**
(21) Anmeldenummer: 06022600.8
(22) Anmeldetag: 30.10.2006
(51) Int. Cl.: E05B 65/19, B60R 21/34

(54) **Klappenanordnung eines Fahrzeuges mit einer Schließvorrichtung**
Hood arrangement of a vehicle with a locking device
Agencement de capot d'un véhicule avec un dispositif de verrouillage

(30) Priorität: 08.12.2005 DE 102005058516
(43) Veröffentlichungstag der Anmeldung: 13.06.2007
(73) Patentinhaber: Bayerische Motoren Werke Aktiengesellschaft, 80809 München (DE)
(72) Erfinder: Drexl, Thomas, 80801 München (DE); Köstler, Ulrich, 85241 Hebertshausen (DE); Kahl, Florian, 85716 Unterschleißheim (DE); Strnad, Jörg, 83052 Bruckmühl (DE)

(56) Entgegenhaltungen:
- EP-A- 1 319 561
- EP-A- 1 526 046
- DE-A1- 10 318 796
- DE-B3- 10 350 534
- US-A1- 2002 011 365

## Beschreibung

Die Erfindung betrifft eine Klappenanordnung eines Fahrzeuges mit einer Schließvorrichtung zum Halten einer Klappe des Fahrzeugs an einer Karosserie des Fahrzeuges in einer geschlossenen Stellung, einer Betätigungseinrichtung zum wahlweisen Öffnen der Schließvorrichtung sowie einem Aktor zum Bewegen der Klappe aus der geschlossenen Stellung in eine angehobene Stellung im Fall einer detektierten Kollision des Fahrzeuges mit einem Fußgänger.

Die oben genannte Klappenanordnung wird im Falle einer Kollision beispielsweise eines Fußgängers an einer Frontklappe eines Fahrzeugs wirksam, indem mit Hilfe des Aktors während der Kollision die die Frontklappe angehoben und so der Abstand zwischen der Frontklappe und darunter liegenden steifen Elementen des Fahrzeugs in sehr kurzer Zeitz vergrößert wird. Mit dem vergrößerten Abstand zwischen den steifen Elementen und der Frontklappe wird erreicht, dass ein ausreichender Deformationsweg der Frontklappe zur Verfügung steht, um den Aufprall des Fußgängers auf ein biomechanisch verträgliches Maß zu verzögern.

An der Klappenanordnung ist ferner in der Regel eine Schließvorrichtung zum Halten der Klappe des Fahrzeugs an der Karosserie in einer geschlossenen Stellung vorgesehen. Diese Schließvorrichtung ist bei einer Frontklappe oftmals in deren vorderem Abschnitt angeordnet, (siehe z.B. Dokument DE-B3-103 50 534).

Zum Bewegen der Klappe in die angehobene Stellung ist mindestens ein Aktor mit in der Regel einer Aktorführung vorgesehen, der beispielsweise pyrotechnischer Art sein kann. Beim Anheben der Klappe wirken durch ein funktionsbedingtes Spiel an der Aktorführung neben Kräften in Anhebrichtung auch Kräfte quer dazu. Diese Querkräfte wirken nach erfolgter Anhebung der Klappe zumindest in gewissem Umfang weiter. Speziell bei einer Frontklappe führt der Anhebvorgang im Fußgängeraufprallfall dazu, dass auf die Klappe Kräfte in Hauptfahrtrichtung einwirken.

Nach einem fälschlicherweise sensierten Fußgängeraufprallfall, also einer Fehlauslösung des Aktors, bei der mit dem Aktor die Klappe unnötigerweise in die angehobene Stellung versetzt worden ist, versuchen viele Fahrzeugführer die Klappe wieder in die geschlossene Stellung zurückzudrücken. Bei diesem Versuch entriegeln die Fahrzeugführer oftmals auch die Schließvorrichtung. Durch die an der Klappe anliegenden Querkräfte verschiebt sich nach diesem Öffnen der Schließeinrichtung die Klappe in Richtung der Kräfte. Im Fall einer Frontklappe bewegt sich diese nach vorne, d.h. sie wird in Hauptfahrtrichtung des Fahrzeuges relativ zur Karosserie versetzt.

Bei einer derart versetzten Klappe ist bei einem nicht- bzw. teilreversierten Aktor ein Zurückbewegen der Klappe in deren geschlossene Stellung durch einfache manuelle Maßnahmen nicht mehr möglich. Wird die Klappe aus dieser Stellung nach unten gedrückt, so treffen die Elemente der Schließvorrichtung nicht mehr zusammen. Ferner ist bei einer derart versetzten Frontklappe die Fangfunktion eines zugehörigen Fanghakens nicht mehr gewährleistet. Aus Gründen der Fahrsicherheit kann eine Weiterfahrt dann nicht zugelassen werden. Das Fahrzeug müsste also in eine Werkstatt abgeschleppt werden, in der die Klappe mit mit entsprechendem zusätzlichen Aufwand in die geschlossene Stellung zurückbewegt werden muss.

Des Weiteren können bei einer derart versetzten Klappe deren Aktuatoren teiweise nur einseitig reversiert werden und es kann durch unterschiedliche Querverschiebung der Klappe ein Verdrehen der Klappe auftreten. In diesem Fall besteht - insbesondere im Hinblick auf die an Fahrzeugen inzwischen erreichten geringen Fugenmaße, die Gefahr, dass die Klappe an einer Seitenwand des Fahrzeugs zu liegen kommt und dies zu Beschädigungen am Fahrzeug führt.

### Zugrundeliegende Aufgabe

Eine der Erfindung zugrundeliegende Aufgabe besteht darin, ein Fahrzeug mit einer Klappenanordnung der eingangs genannten Art bereitzustellen, bei der an der Klappenanordnung trotz einem Einwirken von Querkräften die angehobene Klappe in einfacher Weise auch von einem Fahrzeugführer in ihre geschlossene Stellung zurückbewegt werden kann. Eine weitere Aufgabe der Erfindung besteht darin, dass es bei der Zurückbewegen der Klappe trotz einem Einwirken von Querkräften in die geschlossene Stellung weder zu einer Beschädigung der Klappe noch des zugehörigen Fahrzeugs kommt.

### Erfindungsgemäße Lösung

Diese Aufgabe ist erfindungsgemäß mit einer gattungsgemäßen Klappenanordnung gelöst, bei der ein Mittel vorgesehen ist, mit dem bei angehobener Stellung der Klappe ein Öffnen der Schließvorrichtung mittels der Betätigungseinrichtung verhindert ist. Die Aufgabe ist erfindungsgemäß ferner mit einem Fahrzeug gelöst, das mit einer derartigen Klappenanordnung versehen ist.

Bei der erfindungsgemäßen Klappenanordnung wird nach einem Auslösen des Aktors bei einem sensierten Fußgängeraufprallfall sichergestellt, dass die Schließvorrichtung nicht mehr mittels der Betätigungseinrichtung geöffnet werden kann. Unternimmt nun der Fahrzeugführer den in diesem Fall häufigen Versuch, die Schließvorrichtung mittels der Betätigungseinrichtung zu öffnen, so bleibt die Schließvorrichtung dennoch verriegelt. Erfindungsgemäß wird dadurch bereits verhindert, dass die Klappe sich in Querrichtung bezüglich der Anhebrichtung verschieben kann. Insbesondere wird bei einer Frontklappe eine Verschiebung in Hauptfahrtrichtung vermieden. Damit kann die Frontklappe selbst bei einem nur teilweisen Reversieren des Aktors zuverlässig durch den Fahrzeugführer oder eine andere Person in die geschlossene Stellung zurückgeführt werden. Die Schließvorrichtung ist bevorzugt erst nach dem Zurückführen der Klappe in die geschlossene Stellung wieder mittels der Betätigungseinrichtung in gewohnter Weise betätigbar. Weiterhin wird durch die erfindungsgemäße Vermeidung einer Querverschiebung der Klappe verhindert, dass beim Zurückführen der Klappe in die geschlossene Stellung diese auf einer Seitenwand des Fahrzeugs zu liegen kommt. Damit werden Beschädigungen am Fahrzeug vermieden.

### Vorteilhafte Weiterbildungen der Erfindung

In vorteilhafter Ausführungsform wirkt der Aktor derart mit dem Mittel zusammen, dass durch die Bewegung des Aktors zum Anheben der Klappe mit dem Mittel das Öffnen der Schließvorrichtung mittels der Betätigungseinrichtung verhindert ist. Mit anderen Worten wird bei einer Bewegung des Aktors von einer Ruheposition in eine Anhebposition derart auf die Betätigungseinrichtung eingewirkt, dass die Schließvorrichtung nicht mehr mittels der Betätigungseinrichtung geöffnet werden kann. Vorteilhafterweise wird dabei zumindest ein Teil der Betätigungseinrichtung von der Schließvorrichtung entkoppelt. Durch die derartige Einwirkung des Aktors auf die Betätigungseinrichtung, wird eine besonders verlässliche Entkoppelung von der Schließvorrichtung erreicht. Da die Bewegung der Klappe in die angehobene Stellung auf die Bewegung des Aktors zurückgeht, kann durch die gleichzeitige Nutzung der Bewegung des Aktors für das Einwirken auf die Schließvorrichtung gemäß der vorliegenden erfindungsgemäßen Ausführungsform die Schließvorrichtung verlässlich und ohne zeitliche Verzögerung von zumindest einem Teil der Betätigungseinrichtung entkoppelt werden.

In zweckmäßiger Ausführungsform weist die Betätigungseinrichtung weiterhin ein erstes und ein zweites Betätigungselement auf, wobei als Mittel zum Verhindern des Öffnens der Schließvorrichtung das erste Betätigungselement und das zweite Betätigungselement durch Bewegen des Aktors zum Anheben der Klappe voneinander entkoppelbar sind. Diese Anordnung stellt eine besonders einfache und zuverlässige Mechanik zum Entkoppeln mindestens eines der Betätigungselemente von der Schließvorrichtung dar. Durch das Bewegen des Aktors in die Anhebeposition werden also bevorzugt die beiden Betätigungselemente der Betätigungseinrichtung entkoppelt, sodass die Schließvorrichtung nicht mehr mittels Betätigung des ersten Betätigungselements von dem Fahrzeugführer geöffnet werden kann. Zweckmäßigerweise werden die beiden Betätigungselemente beim Zurückstellen des Aktors durch Handkraft oder Eigengewicht der Klappe wieder miteinander gekoppelt, so dass dann das Öffnen der Schließvorrichtung mittels dem ersten Betätigungselement wieder möglich ist.

Zweckmäßigerweise ist das erste Betätigungselement von einem Fahrzeugführer bedienbar, insbesondere in dessen Reichweite angeordnet, und das zweite Betätigungselement zum Betätigen der Schließvorrichtung ausgebildet, insbesondere an dieser befestigt. Vorteilhafterweise ist ferner das erste Betätigungselement vom Fahrgastinnenraum aus zu bedienen, während das zweite Betätigungselement an einem dem Öffnen der Schließvorrichtung dienenden Element der Schließvorrichtung befestigt ist.

Auf technisch besonders einfache und zugleich wirkungsvolle Weise lässt sich die Klappenanordnung gestalten, wenn die beiden Betätigungselemente in einer Wirkrichtung als Zugelemente ausgeführt sind, insbesondere jeweils ein Zugseil aufweisen. Insbesondere können die Zugseile als Bowdenzüge ausgeführt sein. Derartige als Zugelemente ausgelegte Betätigungselemente müssen lediglich bezüglich ihrer Wirkrichtung entkoppelt werden, was technisch besonders einfach und verlässlich bewerkstelligt werden kann. Zweckmäßigerweise ist damit die Schließvorrichtung derart ausgeführt, dass sie mit einem Zugvorgang geöffnet werden kann. Entfällt die Zugkraft, so sollte die Schließvorrichtung automatisch mittels eines Rückstellelementes schließen.

In vorteilhafter Ausführungsform weisen die beiden Betätigungselemente jeweils ein Befestigungselement zum wahlweisen Kraft übertragenden Verbinden der beiden Betätigungselemente miteinander auf, wobei die Befestigungselemente zum seitlichen aneinander Angreifen insbesondere jeweils mit einem seitlichen Vorsprung gestaltet sind. Vorteilhafterweise ist dieser seitliche Vorsprung jeweils so gestaltet, dass die Befestigungselemente in einer Richtung quer zur Wirkrichtung der Betätigungselemente ohne größeren Aufwand voneinander lösbar sind. Insbesondere ist es vorteilhaft, wenn die Befestigungselemente hakenförmig gestaltet sind. Die Hakenabschnitte sollten derart aufeinander abgestimmt sein, dass bei einem in der Ruheposition befindlichen Aktor eine zuverlässige Verbindung der beiden Hakenelemente sichergestellt ist. Weiterhin sollte diese Verbindung aber ohne Schwierigkeiten wieder bei entsprechender Querverschiebung der Hakenelemente zueinander lösbar sein.

In zweckmäßiger Ausführungsform weist die Klappenanordnung ein Kopplungselement auf, mittels dem die beiden Betätigungselemente wahlweise miteinander gekoppelt sind. Darüber hinaus ist es vorteilhaft, wenn die beiden Betätigungselemente jeweils ein Befestigungselement aufweisen, wobei die Befestigungselemente durch das Kopplungselement miteinander gekoppelt sind und die Betätigungselemente durch ein Versetzen des Kopplungselements relativ zu mindestens einem der Befestigungselemente, insbesondere quer zu einer Wirkrichtung der Betätigungselemente voneinander entkoppelbar sind. Damit können die Betätigungselemente auf besonders zuverlässige und dennoch technisch einfach zu realisierende Weise entkoppelt werden. So kann etwa das Kopplungselement relativ zu den beiden Befestigungselementen quer zur Wirkrichtung versetzt werden. Damit wird die Kopplung des Kopplungselements zu beiden Betätigungselementen aufgegeben und somit die beiden Betätigungselemente voneinander entkoppelt. Weiterhin ist es aber auch möglich, nur eines der Befestigungselemente relativ zum Kopplungselement zu versetzen. In diesem Fall bleibt das zweite Befestigungselement mit dem Kopplungselement verbunden.

In einer weiterhin zweckmäßigen Ausführungsform sind die beiden Betätigungselemente durch ein Bewegen eines/des Kopplungselements und/oder mindestens eines der Befestigungselemente quer zu einer Wirkrichtung der Betätigungselemente voneinander entkoppelbar. Insbesondere kann eine Entkopplung etwa durch Anheben des Kopplungselements geschehen. Um eine Entkopplung der Betätigungselemente voneinander durch Bewegen mindestens eines der Befestigungselemente quer zur Wirkrichtung der Betätigungselemente zu erleichtern, kann die Klappenanordnung auch ohne Kopplungselement gestaltet sein.

In darüber hinaus vorteilhafter Ausführungsform ist das Kopplungselement in einer Richtung, insbesondere in Wirkrichtung der Betätigungseinrichtung, bewegbar am Aktor, insbesondere einem Aktoroberteil, und/oder an einem Scharnierunterteil einer Scharnieranordnung zum schwenkbaren Abstützen der Klappe des Fahrzeugs an der Karosserie geführt. Diese Führung kann etwa mittels einer Nut-Steg-Führung des Kopplungselements an dem Aktor und/oder dem Scharnierunterteil oder einer entsprechenden Schienenführung erfolgen. Damit kann das Kopplungselement bei Betätigung der Betätigungseinrichtung zum Öffnen der Schließvorrichtung dem Weg der Betätigungselemente folgen. Wird nun der Aktor ausgelöst, so bewegt sich das Aktoroberteil und das Scharnierunterteil in die angehobene Stellung. Diese Bewegung erfolgt quer zur bewegbaren Führung des Kopplungselements an dem Aktor und/oder dem Scharnierunterteil. Damit wird das Kopplungselement zusammen mit dem Aktoroberteil bzw. dem Scharnierunterteil angehoben. Damit erfolgt mit dem Auslösen des Aktors eine Entkopplung der beiden Betätigungselemente voneinander.

Darüber hinaus ist es zweckmäßig, wenn das Kopplungselement mindestens einen Einhängabschnitt aufweist, in den mindestens eines der Betätigungselemente einhängbar ist. In vorteilhafter Ausführungsform ist der mindestens eine Einhängabschnitt des Kopplungselements mit einer Ausnehmung in einer Wandung des Kopplungselements gestaltet. Insbesondere kann das Kopplungselement in Form eines nach einer Seite hin offenen Gehäuses ausgeführt sein. Die Ausnehmungen sind vorteilhafterweise als Langlöcher gestaltet, die in die offene Seite des Gehäuses einmünden. Vorteilhafterweise weisen die Betätigungselemente Befestigungselemente z.B. in Form von Nippeln auf, die in das Langloch eingehängt werden. Beim Versetzen des Kopplungselements relativ zu mindestens einem Befestigungselement gleitet das Befestigungselement am offenen Ende des Langlochs aus dem Kopplungsgehäuse heraus, wodurch das entsprechende Befestigungselement von dem Kopplungselement entkoppelt wird.

Darüber hinaus ist es vorteilhaft, wenn das Kopplungselement als Wippeinrichtung mit einem um eine Achse schwenkbaren Schwenkelement gestaltet ist, an welches in einer Ruheposition des Aktors die beiden Betätigungselemente an entgegengesetzten Seiten der Achse angreifen. Vorteilhafterweise ist dabei das Schwenkelement stabförmig ausgeführt. Bei Verwendung einer derartigen Wippeinrichtung als Kopplungselement ist eine Entkopplung der beiden Betätigungselemente besonders einfach und zuverlässig möglich. Vorteilhafterweise ist weiterhin ein Umlenkelement vorgesehen, mittels dem die Wirkrichtung eines der beiden Betätigungselemente umgekehrt wird. Dieses Umlenkelement kann z.B. als Umlenkrolle ausgeführt sein, um welche ein als Zugseil ausgeführtes Betätigungselement herumläuft. Wird nun ein Ende des Zugseils in Zugrichtung bewegt, so bewegt sich das andere Ende des Zugseils in die entgegengesetzte Richtung. Ist das weitere Betätigungselement nun nicht mit einem derartigen Umlenkelement versehen, so wird eine an dem ersten Betätigungselement ausgeübte Zugkraft richtungsgleich auf das zweite Betätigungselement übertragen. Das heißt, die Wippeinrichtung kann ohne weitere konstruktive Maßnahmen als Kopplungselement in einen bestehenden Seilzug eingebaut werden.

In darüber hinaus zweckmäßiger Ausführungsform weist eines der Betätigungselemente ein Befestigungselement auf, welches an das Schwenkelement in Wirkrichtung des Betätigungselements angreift und durch ein Versetzen relativ zum Schwenkelement, insbesondere quer zur Wirkrichtung von dem Schwenkelement entkoppelbar ist. Ein derartiges Befestigungselement kann etwa als ein quer zur Wirkrichtung des entsprechenden Betätigungselements abstehendes starres Ausstellelement ausgeführt sein. So kann etwa das an die Wippeinrichtung angreifende Ende des entsprechenden Betätigungselements als L-förmiger Stab gestaltet sein. Dieser wird bei Betätigung der Wippeinrichtung durch die dabei erfolgende Verschwenkung des Schwenkelements in Wirkrichtung des Betätigungselements verschoben. Wird nun dieses Befestigungselement quer zur Wirkrichtung des Schwenkelements versetzt, so greift das Schwenkelement der Wippeinrichtung nicht mehr an das Befestigungselement an, wodurch die beabsichtigte Entkopplung zwischen der Wippeinrichtung und dem Betätigungselement erreicht wird.

### Kurzbeschreibung der Zeichnungen

Nachfolgend werden Ausführungsbeispiele einer erfindungsgemäßen Klappenanordnung eines Fahrzeugs anhand der beigefügten schematischen Zeichnungen näher erläutert. Es zeigt:
- Fig. 1: einen stark vereinfachten Längsschnitt eines ersten Ausführungsbeispiels einer erfindungsgemäßen Klappenanordnung mit einer Betätigungseinrichtung,
- Fig. 2: eine perspektivische Ansicht der Betätigungseinrichtung gemäß Fig. 1 in dem mit II bezeichneten Bereich in entkoppeltem Zustand,
- Fig. 3: eine perspektivische Ansicht der Betätigungseinrichtung gemäß Fig. 2 in geschlossenem Zustand, wobei die Betätigungseinrichtung in einer um ihre Längsachse gegenüber der Ansicht gemäß Fig. 2 gedrehten Stellung gezeigt ist,
- Fig. 4: eine perspektivische Vorderansicht von schräg oben auf die Betätigungseinrichtung gemäß Fig. 2 sowie ein diesbezügliches Führungselement,
- Fig. 5: einen stark vereinfachten Längsschnitt eines zweiten Ausführungsbeispiels einer erfindungsgemäßen Klappenanordnung,
- Fig. 6: eine perspektivische Ansicht der Betätigungseinrichtung gemäß Fig. 5 in dem mit VI bezeichneten Bereich in entkoppeltem Zustand,
- Fig. 7: eine perspektivische Ansicht der Betätigungseinrichtung gemäß Fig. 6 in geschlossenem Zustand,
- Fig.8: einen stark vereinfachten Längsschnitt eines dritten Ausführungsbeispiels einer erfindungsgemäßen Klappenanordnung,
- Fig.9: eine perspektivische Ansicht eines Abschnitts einer Betätigungseinrichtung gemäß Fig. 8 in dem mit VNH bezeichneten Bereich in entkoppeltem Zustand,
- Fig. 10: eine perspektivische Ansicht der Betätigungseinrichtung gemäß Fig. 9 in geschlossenem Zustand,
- Fig. 11: einen stark vereinfachten Längsschnitt eines vierten Ausführungsbeispiels einer erfindungsgemäßen Klappenanordnung,
- Fig. 12: eine Längsschnittansicht eines Abschnitts der Betätigungseinrichtung gemäß Fig. 11 in dem mit XII bezeichneten Bereich in entkoppeltem Zustand, sowie
- Fig. 13: eine Längsschnittansicht der Betätigungseinrichtung gemäß Fig. 12, in geschlossenem Zustand.

### Detaillierte Beschreibung von Ausführungsbeispielen

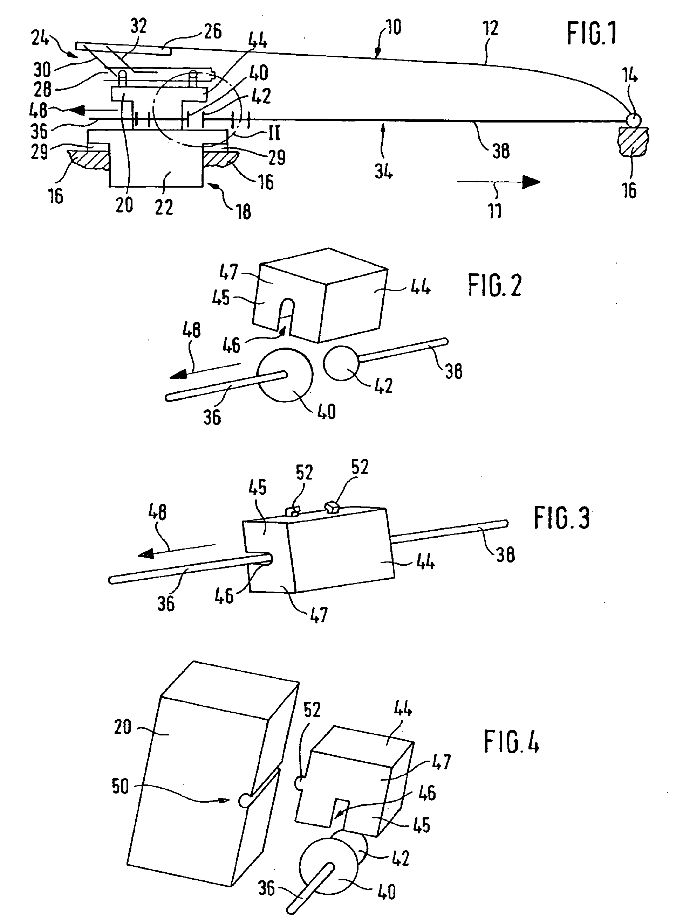

In Fig. 1 ist ein erstes Ausführungsbeispiel einer Klappenanordnung 10 eines weiter nicht dargestellten Fahrzeuges veranschaulicht, welche sich in einer mit einem Pfeil gekennzeichneten Hauptfahrtrichtung 11 des zugehörigen Fahrzeugs erstreckt. Die Klappenanordnung 10 umfasst eine Klappe 12 in Gestalt einer Frontklappe des zugehörigen Fahrzeuges, welche einerseits an ihrem bezogen auf die Hauptfahrtrichtung 11 hinteren Endbereich mittels mindestens einem Scharnier 24 an einer Karosserie 16 des Fahrzeuges schwenkbar gelagert ist. Andererseits ist die Klappe 12 an ihrem bezogen auf die Hauptfahrtrichtung 11 vorderen Endbereich mittels mindestens einer Schließvorrichtung 14 in Gestalt eines Frontklappenverschlusses an der Karosserie 16 gehaltert.

Das Scharnier 24 ist mit einem Scharnierunterteil 28 gestaltet, an dem zwei verschieden lange Scharnierhebel 30 und 32 schwenkbar gelagert sind. An diesen Scharnierhebeln 30 und 32 ist ein Scharnieroberteil 26 schwenkbar gelagert und auf diese Weise ein Viergelenk zum schwenkbaren Bewegen der Klappe 12 aus einer geschlossenen Stellung in eine angehobene Stellung und umgekehrt gebildet.

Das Scharnierunterteil 28 ist auf einem Aktor 18 ortsfest gelagert, der ein Aktorunterteil 22 und ein Aktoroberteil 20 umfasst. Das Aktorunterteil 22 ist dabei über Halter 29 ortsfest an der Karosserie 16 des Fahrzeugs befestigt und das Aktoroberteil 20 ist relativ zu diesem Aktorunterteil 22 nach oben verschiebbar in einer weiter nicht veranschaulichten Führung gelagert. An dem Aktoroberteil 20 ist das Scharnierunterteil 28 ortsfest befestigt.

Bei der in Fig. 1 gezeigten Darstellung befindet sich das Aktoroberteil 20 dabei in einer angehobenen Stellung. Da das Scharnierunterteil 28 an dem Aktoroberteil 20 ortsfest befestigt ist, befindet sich die Klappe 12 insgesamt in einer angehobenen Stellung, die bei einer detektierten Kollision des Fahrzeugs mit einem Fußgänger erreicht wird.

Zum Öffnen der Schließvorrichtung 14 ist eine Betätigungseinrichtung 34 vorgesehen. Die Betätigungseinrichtung 34 umfasst ein erstes Betätigungselement 36 in Gestalt eines Bowdenzuges, welches aus dem Fahrgastinnenraum in einer Zug- bzw. Wirkrichtung 48 der Betätigungseinrichtung 34 bewegbar ist. Weiterhin umfasst die Betätigungseinrichtung 34 ein an der Schließvorrichtung 14 angreifendes zweites Betätigungselement 38 in Gestalt eines Bowdenzuges. Das erste Betätigungselement 36 ist mit dem zweiten Betätigungselement 38 über ein Kopplungselement 44 koppelbar. In der in Fig. 1 dargestellten Aktorstellung mit angehobenem Aktoroberteil 20 befindet sich das Kopplungselement 44 ebenfalls in einer angehobenen Stellung, wie auch in Fig. 2 näher im Detail dargestellt. In dieser angehobenen Stellung des Kopplungselements 44 sind die beiden Betätigungselemente 36 und 38 voneinander entkoppelt. Das heißt, wird das erste Betätigungselement 36 in Wirkrichtung 48 gezogen, so wird diese Bewegung nicht auf das zweite Betätigungselement 38 übertragen. Damit bleibt die Schließvorrichtung 14 im geschlossenen Zustand.

Die beiden Betätigungselemente 36 und 38 weisen an ihren aneinander gegenüberliegenden Enden jeweils ein scheibenförmiges Befestigungselement 40 und 42 auf. Das Kopplungselement 44 ist in Form eines quaderförmigen Gehäuses ausgeführt, welches nach einer Seite hin offen ist. Das quaderförmige Gehäuse des Kopplungselements 44 weist an einander gegenüberliegenden stirnseitigen Wandungen 47 jeweils einen Einhängabschnitt 45 zum Einhängen der Befestigungselemente 40 und 42 auf. Diese Einhängabschnitte 45 weisen jeweils eine zur offenen Seite des quaderförmigen Gehäuses des Kopplungselements 44 hin offene Ausnehmung 46 in Gestalt eines Langloches auf.

Wie in Fig. 4 dargestellt, weist das Kopplungselement 44 an einer zu den die Ausnehmungen 46 aufweisenden Wandungen quer verlaufenden Seitenwand Laufelemente 52 zum Eingreifen in eine Führungsschiene 50 am Aktoroberteil 20 auf. Die Führungsschiene 50 kann aber auch am Scharnierunterteil 28 angeordnet sein. Wird die Betätigungseinrichtung 34 im Zustand mit abgesenkten Aktoroberteil 20, bei dem das Kopplungselement 44, wie in Fig. 3 dargestellt, die beiden Befestigungselemente 40 und 42 miteinander koppelt, in Wirkrichtung 48 gezogen, so gleitet das Kopplungselement 44 an der Führungsschiene 50 des Aktoroberteils 20 entlang. Wird nun der Aktor ausgelöst, bewegt sich, wie bereits vorstehend erläutert, das Aktoroberteil 20 in eine angehobene Stellung. Dabei wird das Kopplungselement 44 durch die Befestigung des Aktoroberteils 20 in der Führungsschiene 50 in die in den Fig. 1 und 2 dargestellte angehobene Stellung verbracht.

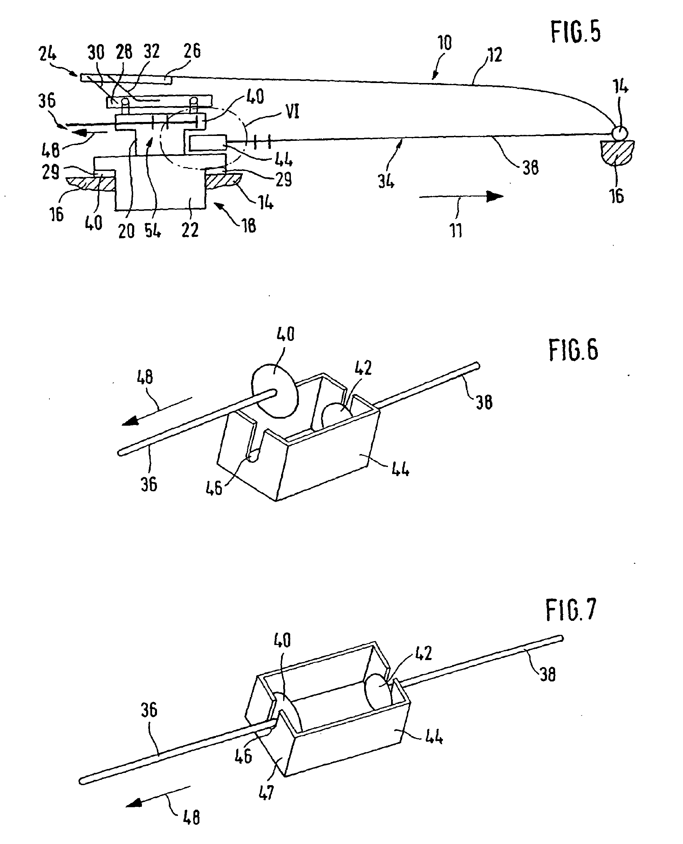

In Fig. 5 ist ein zweites Ausführungsbeispiel der erfindungsgemäßen Klappenanordnung 10 veranschaulicht. Diese entspricht mit Ausnahme der Kopplungsmechanik der Betätigungseinrichtung 34 der Klappenanordnung 10 gemäß Fig. 1. Wie in Fig. 7 im Detail dargestellt, ist das Kopplungselement 44 in dieser Ausführungsform gegenüber der Anordnung des Kopplungselements 44 in der Ausführungsform gemäß Fig. 1 in einer umgekehrten Stellung angeordnet. In dieser Stellung zeigt die offene Seite des quaderförmigen Gehäuses des Kopplungselements 44 nach oben hin. Auch hier sind die beiden Betätigungselemente 36 und 38 bei abgesenktem Aktoroberteil 20 in Ausnehmungen 46 in den stirnseitigen Wandungen 47 des Kopplungselements 44 eingehängt. Weiterhin ist das erste Betätigungselement 36 mittels mindestens einem Clip 54 an dem Aktoroberteil 20 bzw. dem Scharnierunterteil 28 in Wirkrichtung 48 bewegbar befestigt. Wird nun der Aktor 18 ausgelöst und bewegt sich das Aktoroberteil 20 entsprechend nach oben, so wird das erste Betätigungselement 36 mit angehoben, sodass das Befestigungselement 40 des Kopplungselements 44 das offene Ende der Ausnehmung 46 verlässt. Diese entkoppelte Stellung ist in Fig. 6 veranschaulicht.

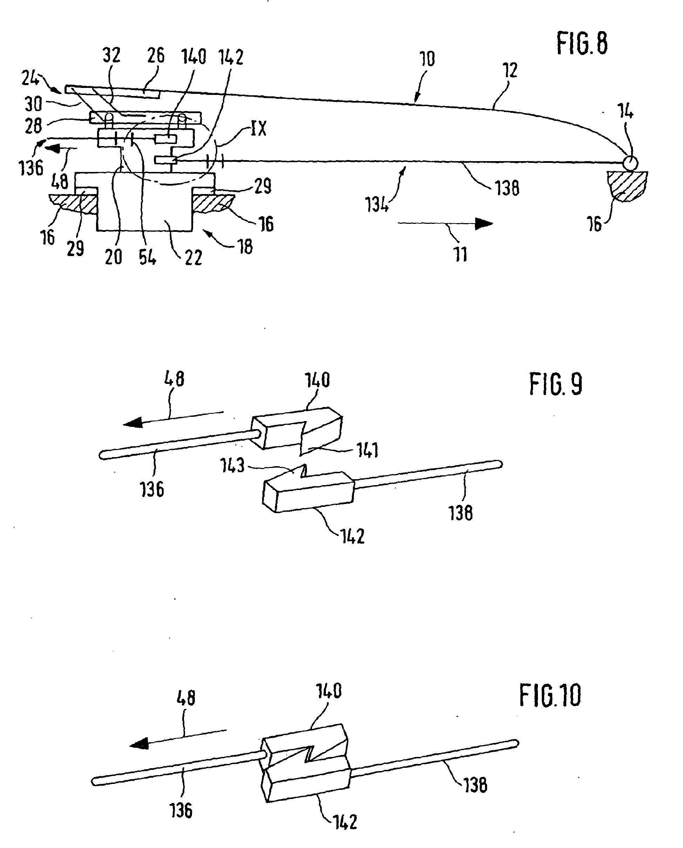

Weiterhin ist ein drittes Ausführungsbeispiel einer erfindungsgemäßen Klappenanordnung 10 in Fig. 8 veranschaulicht, welches mit einer gegenüber den ersten beiden Ausführungsbeispielen unterschiedlichen Betätigungseinrichtung 134 ausgestattet ist. Die Betätigungseinrichtung 134 gemäß Fig. 8 weist ein erstes Betätigungselement 136 und ein zweites Betätigungselement 138 auf, von denen jedes ein Befestigungselement 140 aufweist, welche zum Aneinanderangreifen gestaltet sind. Dazu weisen die Befestigungselemente 140 und 142 jeweils einen quer zur Wirkrichtung 48 der Betätigungselemente 140 und 142 abstehenden Vorsprung 141 und 143 auf, wodurch sie eine hakenförmige Gestalt erhalten. Die Befestigungselemente 140 und 142 verhaken mittels der Vorsprünge 141 und 143 bei abgesenktem Aktoroberteil 20, wie in Fig. 10 dargestellt, und stellen eine Zugkopplung in Wirkrichtung 48 der Betätigungselemente 136 und 138 her. Bei einem Anheben des Aktoroberteils 20 wird das Befestigungselement 140 des Betätigungselementes 136 ebenfalls angehoben und damit quer zur Wirkrichtung 48 versetzt. Damit entkoppeln die beiden Befestigungselemente 140 und 142, wodurch die Schließvorrichtung 14 nicht mehr durch Betätigung des ersten Betätigungselementes 136 geöffnet werden kann.

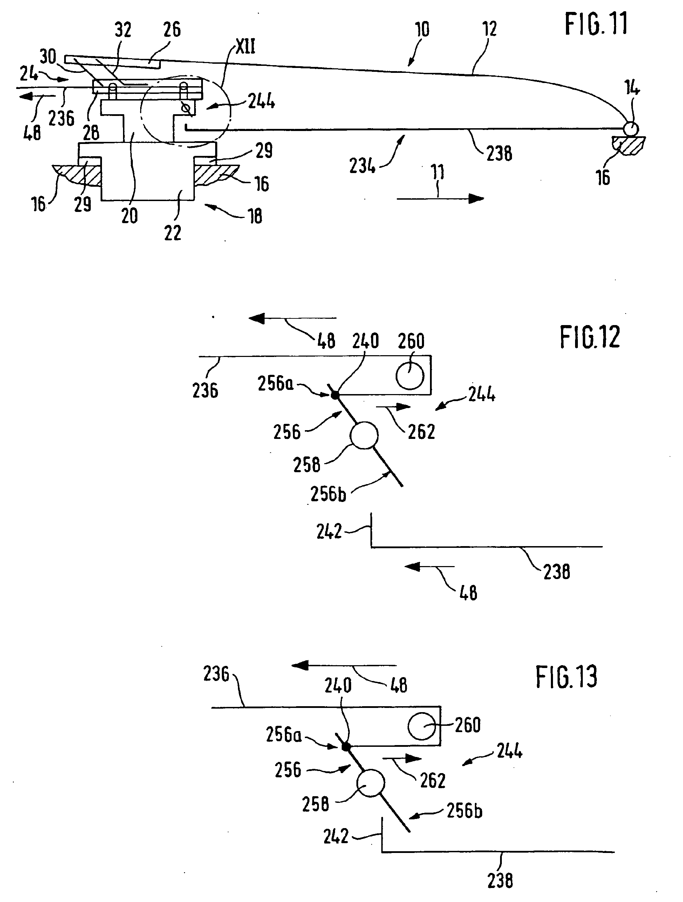

Schließlich ist in Fig. 11 ein viertes Ausführungsbeispiel einer erfindungsgemäßen Klappenanordnung 10 veranschaulicht. Dieses Ausführungsbeispiel enthält eine gegenüber den ersten drei Ausführungsbeispielen unterschiedliche Betätigungseinrichtung 234. Die als Bowdenzüge ausgeführten Befestigungselemente 236 und 238 sind über ein Kopplungselement 244 in Gestalt einer Wippeinrichtung miteinander koppelbar. In Ruhestellung des Aktors 18, in der das Aktoroberteil 20 abgesenkt ist, sind die beiden Betätigungselemente 236 und 238, wie in Fig. 13 gezeigt, miteinander gekoppelt. Das erste Betätigungselement 236, das vom Fahrgastinnenraum her betätigbar ist und als Bowdenzug ausgebildet ist, wird um ein Umlenkelement 260 geführt, mittels dem seine Wirkrichtung 48 umgekehrt wird. Das über das Kopplungselement 244 zu koppelnde Seilende des als Bowdenzug ausgeführten ersten Betätigungselementes 236 weist damit eine gegenüber der Wirkrichtung 48 umgekehrte Wirkrichtung 262 auf.

Das Kopplungselement 244 in Gestalt einer Wippeinrichtung umfasst ein um eine Schwenkachse 258 schwenkbares Schwenkelement 256 auf. An einem ersten Ende 256a des Schwenkelementes 256 ist das um das Umlenkelement 260 herum geführte Ende des ersten Betätigungselementes 236, gegebenenfalls mittels einem Befestigungselement 240 ortsfest befestigt. An einem dem Ende 256a bezüglich der Schwenkachse 258 gegenüberliegenden Ende 256b des Schwenkelements 256 greift ein Befestigungselement 242 des zweiten Befestigungselementes an. Das Befestigungselement 242 ist als starres Winkelelement ausgeführt, welches einen quer zur Wirkrichtung 48 verlaufenden Abschnitt aufweist. Dieser Abschnitt greift an einer Seite des Schwenkelementendes 256b an. Wird das erste Befestigungselement 236 in Wirkrichtung 48 bewegt, so verschwenkt das Schwenkelement 256 gemäß Fig. 13 in Uhrzeigerrichtung. Damit wird das zweite Betätigungselement 238 ebenfalls in Wirkrichtung 48 versetzt.

Sowohl das erste Betätigungselement 236 als auch das Kopplungselement 244 sind an dem Aktoroberteil 20 bzw. dem Scharnierunterteil 28 befestigt, sodass bei Anheben des Aktoroberteils 20 sowohl das erste Betätigungselement 236 als auch das Kopplungselement 244 mit angehoben werden. Das zweite Betätigungselement 238 hingegen verbleibt in seiner Stellung, sodass eine Entkopplung des Befestigungselementes 242 vor dem Ende 256b des Schwenkelements 256, wie in Fig. 12 veranschaulicht, eintritt.

### Bezugszeichenliste

- 10: Klappenanordnung
- 11: Hauptfahrtrichtung
- 12: Klappe
- 14: Schließvorrichtung
- 16: Karosserie
- 18: Aktor
- 20: Aktoroberteil
- 22: Aktorunterteil
- 24: Scharnier
- 26: Scharnieroberteil
- 28: Scharnierunterteil
- 29: Halter
- 30: Scharnierhebel
- 32: Scharnierhebel
- 34: Betätigungseinrichtung
- 36: erstes Betätigungselement
- 38: zweites Betätigungselement
- 40: Befestigungselement
- 42: Befestigungselement
- 44: Kopplungselement
- 45: Einhängabschnitt
- 46: Ausnehmung
- 47: Wandung
- 48: Wirkrichtung
- 50: Führungsschiene
- 52: Laufelement
- 54: Clip
- 134: Betätigungseinrichtung
- 136: erstes Betätigungselement
- 138: zweites Betätigungselement
- 140: Befestigungselement
- 141: Vorsprung
- 142: Befestigungselement
- 143: Vorsprung
- 234: Betätigungseinrichtung
- 236: erstes Betätigungselement
- 238: zweites Betätigungselement
- 240: Befestigungselement
- 242: Befestigungselement
- 244: Kopplungselement
- 256: Schwenkelement
- 256a: Ende des Schwenkelements
- 256b: Ende des Schwenkelements
- 258: Schwenkachse
- 260: Umlenkelement
- 262: Wirkrichtung des Seilendes

## Patentansprüche

1. Klappenanordnung (10) eines Fahrzeuges mit einer Schließvorrichtung (14) zum Halten einer Klappe (12) des Fahrzeuges an einer Karosserie (16) des Fahrzeuges in einer geschlossenen Stellung, einer Betätigungseinrichtung (34, 134, 234) zum wahlweisen Öffnen der Schließvorrichtung (14), sowie einem Aktor (18) zum Bewegen der Klappe (12) aus der geschlossenen Stellung in eine angehobene Stellung im Falle einer detektierten Kollision des Fahrzeuges mit einem Fußgänger,
**dadurch gekennzeichnet, dass** ein Mittel vorgesehen ist, mit dem bei angehobener Stellung der Klappe (12) ein Öffnen der Schließvorrichtung (14) mittels der Betätigungseinrichtung (34, 134, 234) verhindert ist.

2. Klappenanordnung nach Anspruch 1,
**dadurch gekennzeichnet, dass** der Aktor (18) derart mit dem Mittel zusammenwirkt, dass durch die Bewegung des Aktors (18) zum Anheben der Klappe (12) mit dem Mittel das Öffnen der Schließvorrichtung (14) mittels der Betätigungseinrichtung (34, 134, 136) verhindert ist.

3. Klappenanordnung nach Anspruch 1 oder 2,
**dadurch gekennzeichnet, dass** die Betätigungseinrichtung (34, 134, 234) ein erstes Betätigungselement (36, 236, 236) und ein zweites Betätigungselement (38, 138, 238) aufweist, wobei als Mittel zum Verhindern des Öffnens der Schließvorrichtung (14) das erste Betätigungselement (36, 136, 236) und das zweite Betätigungselement (38, 138, 238) durch die Bewegung des Aktors (18) zum Anheben der Klappe (12) voneinander entkoppelbar sind.

4. Klappenanordnung nach Anspruch 3,
**dadurch gekennzeichnet, dass** das erste Betätigungselement (36, 136, 236) von einem Fahrzeugführer bedienbar und das zweite Betätigungselement (38, 138, 238) die Schließvorrichtung (14) betätigend gestaltet sind.

5. Klappenanordnung nach Anspruch 3 oder 4,
**dadurch gekennzeichnet, dass** die beiden Betätigungselemente (36, 136, 236; 38, 138, 238) in einer Wirkrichtung (48) als Zugelemente ausgeführt sind und insbesondere jeweils ein Zugseil aufweisen.

6. Klappenanordnung nach einem der Ansprüche 3 bis 5,
**dadurch gekennzeichnet, dass** die beiden Betätigungselemente (136; 138) jeweils ein Befestigungselement (140; 142) zum wahlweisen Kraft übertragenden Verbinden der beiden Betätigungselemente (136; 138) miteinander aufweisen, wobei die Befestigungselemente (136; 138) zum aneinander Angreifen insbesondere jeweils mit einem seitlichen Vorsprung (141, 143) gestaltet sind.

7. Klappenanordnung nach einem der Ansprüche 3 bis 5,
**gekennzeichnet durch** ein Kopplungselement (44, 244), mittels dem die beiden Betätigungselemente (36, 236; 38, 238) wahlweise miteinander gekoppelt sind.

8. Klappenanordnung nach Anspruch 7,
**dadurch gekennzeichnet, dass** die beiden Betätigungselemente (36, 236; 38, 238) jeweils ein Befestigungselement (40, 240; 42, 242) aufweisen, wobei die Befestigungselemente (40, 240; 42, 242) mit dem Kopplungselement (44, 244) miteinander gekoppelt sind und die Betätigungselemente (36, 236; 38, 238) durch ein Versetzen des Kopplungselements (44, 244) relativ zu mindestens einem der Befestigungselemente (140, 240; 142, 242), insbesondere quer zu einer Wirkrichtung (48) der Betätigungselemente (36, 236; 38, 238), voneinander entkoppelbar sind.

9. Klappenanordnung nach einem der Ansprüche 6 bis 8,
**dadurch gekennzeichnet, dass** die beiden Betätigungselemente (36, 236; 38, 238) durch ein Bewegen eines/des Kopplungselements (44, 244) und/oder mindestens eines der Befestigungselemente (40, 240; 42, 242) quer zu einer Wirkrichtung (48) der Betätigungselemente (36, 236; 38, 238) voneinander entkoppelbar sind.

10. Klappenanordnung nach einem der Ansprüche 7 bis 9,
**dadurch gekennzeichnet, dass** das Kopplungselement (44, 244) in einer Richtung, insbesondere in Wirkrichtung (48) der Betätigungseinrichtung (34, 234), bewegbar am Aktor (18) und/oder an einem Scharnierunterteil (28) einer Scharnieranordnung (24) zum schwenkbaren Abstützen der Klappe (12) des Fahrzeugs an der Karosserie (16) geführt ist.

11. Klappenanordnung nach einem der Ansprüche 7 bis 10,
**dadurch gekennzeichnet, dass** das Kopplungselement (44) mindestens einen Einhängabschnitt (45) aufweist, in den mindestens eines der Betätigungselemente (36, 38) einhängbar ist.

12. Klappenanordnung nach Anspruch 11,
**dadurch gekennzeichnet, dass** der mindestens eine Einhängabschnitt (45) des Kopplungselements (44) mit einer Ausnehmung (46) in einer Wandung (47) des Kopplungselements (44) gestaltet ist.

13. Klappenanordnung nach einem der Ansprüche 7 bis 10,
**dadurch gekennzeichnet, dass** das Kopplungselement (244) als Wippeinrichtung mit einem um eine Achse (258) schwenkbaren Schwenkelement (256) gestaltet ist, an welches in einer Ruheposition des Aktors (18) die beiden Betätigungselemente (236, 238) an entgegengesetzten Seiten der Achse (258) angreifen.

14. Klappenanordnung nach Anspruch 13,
**gekennzeichnet durch** ein Umlenkelement (260), mittels dem die Wirkrichtung (48) eines der beiden Betätigungselemente (236, 238) umgekehrt wird.

15. Klappenanordnung nach Anspruch 13 oder 14,
**dadurch gekennzeichnet, dass** eines der Betätigungselemente (236, 238) ein Befestigungselement (242) aufweist, welches an das Schwenkelement (256) in Wirkrichtung (48) des Betätigungselements (236, 238) angreift und durch ein Versetzen relativ zum Schwenkelement (256), insbesondere quer zur Wirkrichtung (48) von dem Schwenkelement (256) entkoppelbar ist.

16. Fahrzeug mit einer Klappenanordnung (10) nach einem der vorhergehenden Ansprüche.

## Claims

1. A folding-roof arrangement (10) for a vehicle, comprising a closing device (14) for holding a folding roof (12) of the vehicle in a closed position on a body (16) of the vehicle, also comprising an operating device (34, 134, 234) for opening the closing device (14) when required, and an actuator (18) for moving the folding roof (12) from the closed position into a raised position after detection of a collision between the vehicle and a pedestrian,
**characterised in that** a means is provided for preventing the closing device (14) being opened by the operating device (34, 134, 234) when the folding roof (12) is raised.

2. An arrangement according to claim 1,
**characterised in that** the actuator (18) so co-operates with the said means that the movement of the actuator (18) for raising the roof (12) via the said means prevents the closing device (14) from being opened by the operating device (34, 134, 136).

3. An arrangement according to claim 1 or claim 2,
**characterised in that** the operating device (34, 134, 234) comprises a first operating element (36, 236, 236) and a second operating element (38, 138, 238), wherein the means for preventing the closing device (14) from opening, i.e. the first operating element (36, 136, 236) and the second operating element (38, 138, 238), can be uncoupled from one another by the movement of the actuator (18) for raising the roof (12).

4. An arrangement according to claim 3,
**characterised in that** the first operating element (36, 136, 236) can be actuated by a driver of the vehicle and the second operating element (38, 138, 238) is designed so as to operate the closing device (14).

5. An arrangement according to claim 3 or claim 4,
**characterised in that** the two operating elements (36, 136, 236; 38, 138, 238) are in the form of tension elements in one direction (48) of action and especially each comprise a tension cable.

6. An arrangement according to any of claims 3 to 5,
**characterised in that** the two operating elements (136, 138) each comprise a fastening element (140; 142) for transmitting force when required by connecting the two operating elements (136; 138) to one another, wherein the operating elements (136; 138) especially each have a lateral projection (141, 143) for engaging one another.

7. An arrangement according to any of claims 3 to 5,
**characterised by** a coupling element (44, 244) by means of which the two operating elements (36, 236; 38, 238) can be coupled to one another when required.

8. An arrangement according to claim 7,
**characterised in that** the two operating elements (36, 236; 38, 238) each comprise a fastening element (40, 240; 42, 242) wherein the fastening elements (40, 240; 42, 242) are coupled to one another by the coupling element (44, 244) and the fastening elements (36, 236; 38, 238) can be uncoupled from one another by moving the coupling elements (44, 244) relative to at least one of the fastening elements (140, 240; 142, 242), especially transversely of a direction of action (48) of the operating elements (36, 236; 38, 238).

9. An arrangement according to any of claims 6 to 8,
**characterised in that** the two operating elements (36, 236; 38, 238) can be uncoupled from one another by moving one/the coupling element (44, 244) and/or at least one of the fastening elements (40, 240; 42, 242) transversely of a direction (48) of action of the actuator elements (36, 236; 38, 238).

10. An arrangement according to any of claims 7 to 9,
**characterised in that** the coupling element (44, 244) on the actuator (18) is movable in one direction, especially in the direction of action (48) of the operating device (34, 234) and/or is guided on the bottom part (28) of a hinge arrangement (24) for pivotably resting the folding roof (12) of the vehicle on the body (16).

11. An arrangement according to any of claims 7 to 10,
**characterised in that** the coupling element (44) comprises at least one suspension portion (45) in which at least one of the operating elements (36, 38) can be suspended.

12. An arrangement according to claim 11,
**characterised in that** the at least one suspension portion (45) of the coupling element (44) is formed with a recess (46) in a wall (47) of the coupling element (44).

13. An arrangement according to any of claims 7 to 10,
**characterised in that** the coupling element (244) is in the form of a rocker device comprising a pivoting element (256) pivotable around an axis (258) and on which the two operating elements (236, 238) engage at opposite sides of the axis (258) when the actuator (18) is in an inoperative position.

14. An arrangement according to claim 13,
**characterised by** a guide element (260) for reversing the direction of action (48) of one of the two operating elements (236, 238).

15. An arrangement according to claim 13 or claim 14,
**characterised in that** one of the operating elements (236, 238) comprises a fastening element (242) which engages the pivoting element (256) in the direction of action (48) of the operating element (236, 238) and can be uncoupled from the pivoting element (256) by movement relative to the pivoting element (256), particularly transversely of the direction of action (48).

16. A vehicle comprising a folding-roof arrangement (10) according to any of the preceding claims.

## Revendications

1. Montage de capot (10) de véhicule comportant un dispositif de fermeture (14) pour retenir le capot (12) la carrosserie (16) en position fermée, une installation d'actionnement (34, 134, 234) pour ouvrir sélectivement le dispositif de fermeture (14) ainsi qu'un actionneur (18) pour déplacer le capot (12) de sa position fermée à une position relevée en cas de collision détectée entre le véhicule et un piéton,
montage **caractérisé par**
un moyen qui, en position relevée du capot (12), interdit l'ouverture du dispositif de fermeture (14) par l'installation d'actionnement (34, 134, 234).

2. Montage de capot selon la revendication 1,
**caractérisé en ce que**
l'actionneur (18) coopère avec le moyen, de façon que le mouvement de l'actionneur (18) pour soulever le capot (12) avec le moyen, interdise l'ouverture du dispositif de fermeture (14) par l'installation d'actionnement (34, 134, 136).

3. Montage de capot selon la revendication 1 ou 2,
**caractérisé en ce que**
l'installation d'actionnement (34, 134, 234) comporte un premier élément d'actionnement (36, 136, 236) et un second élément d'actionnement (38, 138, 238),
le moyen pour éviter l'ouverture du dispositif de fermeture (14) étant le découplage du premier élément d'actionnement (36, 136, 236) et le second élément d'actionnement (38, 138, 238) par le mouvement de l'actionneur (18) pour soulever le capot (12).

4. Montage de capot selon la revendication 3,
**caractérisé en ce que**
le premier élément d'actionnement (36, 136, 236) est commandé par le conducteur du véhicule et le second élément d'actionnement (38, 138, 238), est réalisé pour actionner le dispositif de fermeture (14).

5. Montage de capot selon la revendication 3 ou 4,
**caractérisé en ce que**
les deux éléments d'actionnement (36, 136, 236 ; 38, 138, 238) coopèrent avec une installation d'actionnement (48) comme élément de traction et chacun comporte notamment un câble de traction.

6. Montage de capot selon l'une des revendications 3 à 5,
**caractérisé en ce que**
les deux éléments d'actionnement (136, 138) ont chacun un élément de fixation (140, 142) pour relier les deux éléments d'actionnement (136, 138) avec transmission de force et de manière sélective,
les éléments d'actionnement (136, 138) ayant chacun, notamment une saillie latérale (141, 143) pour agir l'un sur l'autre.

7. Montage de capot selon l'une des revendications 3 à 5,
**caractérisé par**
un élément de couplage (44, 244) par lequel les deux éléments d'actionnement (36, 236: 38, 238) peuvent être couplés sélectivement l'un à l'autre.

8. Montage de capot selon la revendication 7,
**caractérisé en ce que**
- les deux éléments d'actionnement (36, 236 ; 38, 238) comportent chacun un élément de fixation (40, 240 ; 42, 242),
- les éléments de fixation (40, 240 ; 42, 242) étant couplés à l'élément de couplage (44, 244), et
- les éléments d'actionnement (36, 236 ; 38, 238) étant découplés l'un par rapport à l'autre par le déplacement de l'élément de couplage (44, 244) par rapport à au moins l'un des éléments de fixation (140, 240 ; 142, 242), notamment transversalement à la direction d'action (48) des éléments d'actionnement (36, 236 ; 38, 238).

9. Montage de capot selon l'une des revendications 6 à 8,
**caractérisé en ce que**
les deux éléments d'actionnement (36, 236 ; 38, 238) peuvent être découplés l'un de l'autre par le mouvement de l'un ou de l'élément de couplage (44, 244) et/ou d'au moins l'un des éléments de fixation (40, 240 ; 42, 242) transversalement à la direction d'action (48) des éléments d'actionnement (36, 236 ; 38, 238).

10. Montage de capot selon l'une des revendications 7 à 9,
**caractérisé en ce que**
l'élément de couplage (44, 244) est guidé de manière mobile sur l'actionneur (18) et/ou sur la partie inférieure (28) d'un montage de charnière (24), notamment dans la direction d'action (48) de l'installation d'actionnement (34, 234) pour soutenir de manière pivotante le capot (12) à la carrosserie (16).

11. Montage de capot selon l'une des revendications 7 à 10,
**caractérisé en ce que**
l'élément de couplage (44) comporte au moins un segment d'accrochage (45) dans lequel s'accroche au moins l'un des éléments d'actionnement (36, 38).

12. Montage de capot selon la revendication 11,
**caractérisé en ce qu'**
au moins un segment d'accrochage (45) de l'élément de couplage (44) a une cavité (46) dans une paroi (47) de l'élément de couplage (44).

13. Montage de capot selon l'une des revendications 7 à 10,
**caractérisé en ce que**
l'élément de couplage (244) est réalisé comme installation basculante avec un élément pivotant (256) tournant autour d'un axe (258) et contre lequel, en position de repos de l'actionneur (18), s'appliquent les deux éléments d'actionnement (236, 238) sur les côtés opposés de l'axe (258).

14. Montage de capot selon la revendication 13,
**caractérisé par**
un élément de renvoi (260) qui inverse la direction d'action (48) de l'un des deux éléments d'actionnement (236, 238).

15. Montage de capot selon la revendication 13 ou 14,
**caractérisé en ce que**
l'un des éléments d'actionnement (236, 238) comporte un élément de fixation (242) qui agit sur l'élément pivotant (256) dans la direction d'action (48) de l'élément d'actionnement (236, 238) et qui peut être découplé de l'élément pivotant (256) par déplacement par rapport à l'élément pivotant (256), notamment transversalement à la direction d'action (48).

16. Véhicule équipé d'un montage de capot (10) selon l'une des revendications précédentes.
